# EUROPÄISCHE PATENTSCHRIFT

(11) **EP 3 877 670 B1**
(45) Veröffentlichungstag und Bekanntmachung des Hinweises auf die Patenterteilung: **23.10.2024**
(21) Anmeldenummer: 19783520.0
(22) Anmeldetag: 07.10.2019
(51) Int. Cl.: F16F 15/14, F03D 15/00

(54) **TORSIONSTILGER FÜR WINDKRAFTANLAGEN**
TORSION ABSORBER FOR WIND TURBINES
ABSORBEUR DE VIBRATIONS DE TORSION POUR ÉOLIENNES

(30) Priorität: 05.11.2018 DE 102018218812
(43) Veröffentlichungstag der Anmeldung: 15.09.2021
(73) Patentinhaber: ZF Friedrichshafen AG, 88046 Friedrichshafen (DE); ZF Wind Power Antwerpen NV, 3920 Lommel (BE)
(72) Erfinder: CAERS, Bart, 2480 Dessel (BE)
(74) Vertreter: ZF Friedrichshafen AG
(86) Internationale Anmeldenummer: PCT/EP2019/077020
(87) Internationale Veröffentlichungsnummer: WO 2020/094308

(56) Entgegenhaltungen:
- EP-A1- 2 372 152
- DE-A1- 4 335 766
- DE-B3- 102008 006 782
- DE-C2- 4 335 766

## Beschreibung

Die Erfindung betrifft einen Torsionstilger nach dem Oberbegriff von Anspruch 1.

Im Antriebsstrang einer Windkraftanlage auftretende Torsionsschwingungen sind problematisch, da sie mit einer erhöhten Belastung der Bauteile einhergehen und Geräuschemissionen hervorrufen. Durch gezielte konstruktive Beeinflussung der Eigenfrequenzen lässt sich das Problem auftretender Torsionsschwingungen mildern. Allerdings müssten dazu die Schwingungseigenschaften sämtlicher im Antriebsstrang zusammenwirkender Komponenten genau bekannt sein. In der Praxis ist dies häufig nicht der Fall.

Aus dem Stand der Technik sind Torsionstilger mit einem einstückigen Schwungring und einem Befestigungsflansch bekannt. Der Befestigungsflansch dient dazu, den Torsionstilger an einer Welle zu befestigen. Der Schwungring ist gegenüber dem Befestigungsflansch verdrehbar und federnd mit diesem verbunden. Durch Gegenschwingungen des Schwungrings werden Torsionsschwingungen der Welle getilgt bzw. gedämpft.

Soll ein Torsionstilger verwendet werden, so ist dies bereits bei der Konstruktion der Welle zu berücksichtigen. Aufgrund des Aufbaus des Torsionstilgers mit einstückigem Schwungring und Befestigungsflansch ist es nicht möglich, eine Welle nachträglich mit dem Torsionstilger auszurüsten.

Die Druckschrift DE 198 56 500 B4 offenbart einen Schwingungstilger für eine Windkraftanlage. Der Schwingungstilger ist im Turm der Windkraftanlage aufgehängt und dämpft translatorische Schwingungen der Triebwerksgondel. Rotationsschwingungen des Triebstrangs bleiben dabei unbeeinflusst.

Der Erfindung liegt die Aufgabe zugrunde, einen Antriebsstrang, insbesondere einen Antriebsstrang einer Windkraftanlage, gegenüber den aus dem Stand der Technik bekannten Lösungen zu verbessern. So sollen die Haltbarkeit der Komponenten des Antriebsstrangs erhöht und dessen Geräuschemissionen vermindert werden. Bestehende Anlagen sollen zu diesem Zweck nachgerüstet werden können.

Diese Aufgabe wird gelöst durch einen Torsionstilger, auch Drehschwingungsdämpfer genannt, nach Anspruch 1 oder 2. Bevorzugte Weiterbildungen sind in den Unteransprüchen enthalten.

Der Torsionstilger ist ausgebildet, auf einem zylindrischen Abschnitt einer Welle befestigt zu werden. Der zylindrische Abschnitt weist eine Oberfläche auf, die der Mantelfläche eines geraden Kreiszylinders entspricht. Bei dem zylindrischen Abschnitt kann es sich etwa um eine Schrumpfscheibe handeln, die einen ersten Teil der Welle mit einem zweiten Teil der Welle drehfest verbindet.

Eine Schrumpfscheibe zeichnet sich dadurch aus, dass sie von außen auf den ersten Teil der Welle und den zweiten Teil der Welle aufgebracht wird und ihr Innendurchmesser durch einen Spannmechanismus verringert werden kann. Dadurch entsteht zwischen der Schrumpfscheibe und dem ersten Teil der Welle sowie zwischen der Schrumpfscheibe und dem zweiten Teil der Welle jeweils eine Presspassung und infolgedessen eine kraftschlüssige Verbindung. Die kraftschlüssige Verbindung dient der Übertragung von Drehmomenten zwischen dem ersten Teil der Welle und dem zweiten Teil der Welle.

Der Torsionstilger weist eine Sekundärmasse, hier Schwungring genannt, auf. Der Schwungring ist relativ zu der Welle um einen geringen Winkel verdrehbar. Insbesondere ist der Winkel der Verdrehbarkeit des Schwungrings relativ zu der Welle geringer als 360°. Der Schwungring ist federnd mit der Welle gekoppelt. Durch Torsionsschwingungen der Welle wird er zu Gegenschwingungen angeregt. Diese wirken auf die Torsionsschwingungen der Welle dämpfend.

Erfindungsgemäß weist der Torsionstilger mindestens ein Spannmittel auf. Bevorzugt handelt es sich bei dem Spannmittel um eine Schraube. Das Spannmittel bewirkt eine Verspannung des ersten Segments und des zweiten Segments gegen den zylindrischen Abschnitt. Dies impliziert, dass das erste Segment und das zweite Segment separate Stücke bilden, die insbesondere nicht einstückig miteinander verbunden sind.

Durch die Verspannung des ersten Segments und des zweiten Segments gegen den zylindrischen Abschnitt übt der Schwungring Normalkräfte bzw. einen Druck in radialer Richtung auf den zylindrischen Abschnitt aus. Infolgedessen kommt zwischen dem Schwungring und dem zylindrischen Abschnitt eine kraftschlüssige Verbindung zustande, die den Schwungring auf dem zylindrischen Abschnitt fixiert.

Durch die mindestens zweistückige Ausführung des Schwungrings kann der erfindungsgemäße Torsionstilger an einer beliebigen Welle angebracht werden, die einen zylindrischen Abschnitt aufweist. Konstruktive Anpassungen sind nicht erforderlich. Insbesondere ist es möglich, eine bereits bestehende Welle mit dem Torsionstilger nachzurüsten.

In einer bevorzugten Weiterbildung ist das Spannmittel zwischen dem ersten Segment und dem zweiten Segment verspannt. Dies impliziert, dass das erste Segment und das zweite Segment durch das Spannmittel gegeneinander verspannt sind. Durch die Verspannung übt das Spannmittel auf das erste Segment und auf das zweite Segment Kräfte aus, die aufeinander zu gerichtet sind. Auf einen Angriffspunkt in dem ersten Segment übt das Spannmittel also eine Kraft aus, die auf einen Angriffspunkt des Spannmittels in dem zweiten Segment gerichtet ist. Umgekehrt übt das Spannmittel auf den Angriffspunkt des zweiten Segments eine Kraft aus, die in Richtung des Angriffspunkts des ersten Segments wirkt. Beide Kräfte sind betragsgleich und weisen ein unterschiedliches Vorzeichen auf.

In einer darüber hinaus bevorzugten Weiterbildung übt das Spannmittel eine bezüglich des zylindrischen Abschnitts tangential verlaufende Spannkraft auf das erste Segment und das zweite Segment aus. Insbesondere verläuft damit die Spannkraft orthogonal zu einer Mittelachse bzw. Symmetrieachse des zylindrischen Abschnitts. Diese Achse ist mit einer Drehachse der Welle identisch.

Die von dem Spannmittel auf das erste Segment ausgeübte Spannkraft bezeichnet die oben genannte Kraft, die in dem Angriffspunkt des Spannmittels auf das erste Segment wirkt. Entsprechend handelt es sich bei der von dem Spannmittel auf das zweite Segment ausgeübten Spannkraft um die oben genannte, in dem Angriffspunkt des Spannmittels auf das zweite Segment wirkende Kraft. Beide Kräfte verlaufen also weiterbildungsgemäß bezüglich des zylindrischen Abschnitts tangential.

Um die Relativbeweglichkeit des Schwungrings bezüglich der Welle zu ermöglichen, ist in einer bevorzugten Weiterbildung eine elastische Einlage vorgesehen, die zwischen dem Schwungring und dem zylindrischen Abschnitt angeordnet ist. Durch die elastische Einlage wird ein zwischen dem Schwungring und dem zylindrischen Abschnitt der Welle verlaufender radialer Zwischenraum ausgefüllt. Die Verspannung des ersten Segments und des zweiten Segments gegen den zylindrischen Abschnitt gestaltet sich dann derart, dass das erste Segment und das zweite Segment gegen die elastische Einlage verspannt werden, die dadurch wiederum gegen den zylindrischen Abschnitt der Welle verspannt wird.

Die elastische Einlage wirkt als Federelement, das durch eine Verdrehung des Schwungrings relativ zu der Welle gespannt wird und eine zwischen dem Schwungring und der Welle wirkende Federkraft aufbringt. Die Federkraft geht mit einem Drehmoment einher, das der Verdrehung des Schwungrings relativ zu der Welle entgegenwirkt.

Eine elastische Einlage ist zu verstehen als eine Einlage, welche die beschriebene Federwirkung aufweist. Diese kommt bevorzugt durch ein Elastizitätsmodul bzw. Schubmodul der Einlage zustande, das geringer ist als ein Elastizitätsmodul bzw. Schubmodul des zylindrischen Abschnitts der Welle und des Schwungringes. So kann die Einlage etwa aus einem Elastomer bestehen.

Wie der Schwungring ist die Einlage bevorzugt mehrstückig ausgeführt, um den Torsionstilger nachrüsten zu können.

Der Schwungring ist bevorzugt mit einem zwischen der Einlage und dem Schwungring befindlichen Zwischenstück weitergebildet, das einen radialen Zwischenraum zwischen der Einlage und dem Schwungring ausfüllt. Das Zwischenstück dient dazu, den Torsionstilger an verschiedene Durchmesser des zylindrischen Abschnitts anzupassen. Damit lässt sich ein einziger Schwungring für mehrere Durchmesser des zylindrischen Abschnitts verwenden. Wie die elastische Einlage ist auch das Zwischenstück im Hinblick auf die Nachrüstbarkeit mehrstückig ausgeführt.

Der Schwungring hat in einer bevorzugten Weiterbildung eine hohlzylindrische Grundform. Die Grundform eines Körpers bezeichnet die Form eines ursprünglichen Körpers, aus dem der erstgenannte Körper durch Eliminieren einzelner Bereiche, etwa durch Einfügen von Aussparungen und/oder durch Hinzufügen einzelner Bereiche entstanden ist.

Bevorzugt ist der Torsionstilger mit einem baugleichen ersten und zweiten Segment weitergebildet. Zwei Komponenten sind baugleich, wenn sie in ihren physikalischen Parametern - insbesondere hinsichtlich ihrer Material- und Geometrieeigenschaften - im Rahmen der auftretenden Fertigungstoleranzen übereinstimmen.

Das baugleich ausgeführte erste und zweite Segment können insbesondere um einen Winkel von 180° um die Mittelachse des zylindrischen Abschnitts verdreht zueinander angeordnet sein.

Eine Trennfuge zwischen dem ersten Segment und dem zweiten Segment verläuft in einer bevorzugten Weiterbildung sowohl radial als auch axial. Dies bedeutet, dass die Trennfuge und die Drehachse der Welle in einer gemeinsamen Ebene verlaufen.

Darüber hinaus verläuft in einer bevorzugten Weiterbildung auch eine zweite Trennfuge zwischen dem ersten Segment und dem zweiten Segment zugleich radial und axial, das heißt mit der Drehachse der Welle in einer gemeinsamen Ebene. Insbesondere können die erste Trennfuge, die zweite Trennfuge und die Drehachse der Welle in einer gemeinsamen Ebene verlaufen.

Die erste Trennfuge und/oder die zweite Trennfuge werden bevorzugt durch jeweils ein Spannmittel der oben beschriebenen Art überbrückt. Dies bedeutet, dass das Spannmittel durch die jeweilige Trennfuge hindurch verläuft. Eine Längsachse des Spannmittels steht dabei orthogonal zu der oben genannten Ebene, welche die Trennfuge und die Drehachse der Welle enthält. Insbesondere stehen die von dem Spannmittel aufgebrachten Kräfte orthogonal zu dieser Ebene.

Bevorzugt sind das erste Segment und das zweite Segment jeweils mehrstückig weitergebildet. Das erste Segment und das zweite Segment umfassen also jeweils ein erstes Teilsegment und ein zweites Teilsegment. Bei den Teilsegmenten handelt es sich um separate Stücke, die nicht einstückig miteinander verbunden sind.

Ein erstes Spannmittel der oben beschriebenen Art verspannt das erste Teilsegment des ersten Segments und das erste Teilsegment des zweiten Teilsegments gegen den zylindrischen Abschnitt. Entsprechend verspannt ein zweites Spannmittel das zweite Teilsegment des ersten Segments und das zweite Teilsegment des zweiten Segments gegen den zylindrischen Abschnitt.

Durch den mehrstückigen Aufbau des ersten Segments und des zweiten Segments verbessert sich die Handhabbarkeit. Dies ist insbesondere bei Windkraftanlagen von Vorteil, da die Platzverhältnisse in der Maschinengondel sehr beengt sind und die einzelnen zu montierenden Teile mittels eines Krans gehoben in große Höhe werden müssen.

Das erste Teilsegment und das zweite Teilsegments des ersten Segments sind in einer bevorzugten Weiterbildung ebenso wie das erste Teilsegment und das zweite Teilsegment des zweiten Segments baugleich. Insbesondere können sämtliche Teilsegmente baugleich sein.

Bevorzugt sind das erste Teilsegment und das zweite Teilsegment des ersten Segments ebenso wie das erste Teilsegment und das zweite Teilsegment des zweiten Segments axial, das heißt in Richtung bzw. parallel zu der Drehachse der Welle, versetzt zueinander angeordnet.

Zwischen dem ersten Teilsegment und dem zweiten Teilsegment des ersten Segments sowie zwischen dem ersten Teilsegment und dem zweiten Teilsegment des zweiten Segments verläuft in einer bevorzugten Weiterbildung jeweils eine Trennfuge radial und in Umfangsrichtung. Die Trennfugen verlaufen also jeweils in einer radial, das heißt orthogonal zu der Drehachse der Welle ausgerichteten Ebene.

Der Torsionstilger ist bevorzugt Teil einer Anordnung für einen Antriebsstrang einer Windkraftanlage. Die Anordnung umfasst neben dem Torsionstilger eine Rotorwelle, ein Getriebe und eine Schrumpfscheibe. Auf der Rotorwelle ist ein Rotor der Windkraftanlage befestigt. Die Rotorwelle trägt also den Rotor. Insbesondere besteht eine drehfeste Verbindung zwischen dem Rotor und der Rotorwelle. Mittels der Schrumpfscheibe ist die Rotorwelle drehfest mit einer Eingangswelle des Getriebes verbunden. Die Rotorwelle und die Eingangswelle bilden zusammen die obengenannte Welle. Dabei stellt die Rotorwelle den ersten Teil der Welle dar, die Eingangswelle den zweiten Teil. Die Schrumpfscheibe bildet einen zylindrischen Abschnitt, auf dem der Torsionstilger befestigt ist.

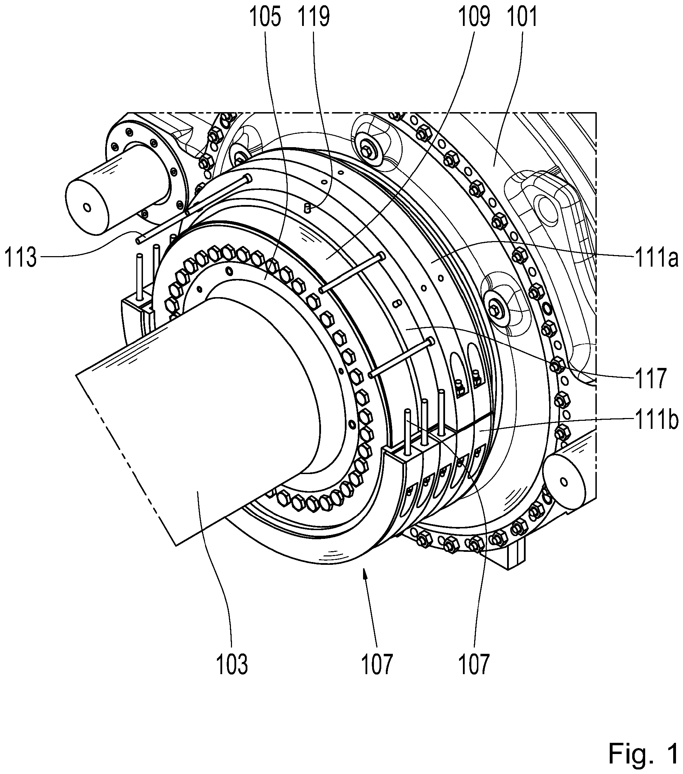

Ein bevorzugtes Ausführungsbeispiel der Erfindung ist in Fig. 1 dargestellt. Im Einzelnen zeigt:
Fig. 1 einen Torsionstilger.

In Fig. 1 ist ein Getriebe 101 einer Windkraftanlage dargestellt. Der Antrieb erfolgt über eine Rotorwelle 103. Ein drehbar gelagerter Planetenträger des Getriebes 101, der eine Eingangswelle ausbildet, ist mittels einer Schrumpfscheibe 105 drehfest mit der Rotorwelle 103 verbunden. Die Schrumpfscheibe 105 übt einen radial gerichteten Druck auf die Rotorwelle 103 und auf die Eingangswelle aus, sodass per Kraftschluss eine drehfeste Verbindung zwischen der Rotorwelle 103 und der Eingangswelle zustande kommt.

Ein äußerer Teil der Oberfläche der Schrumpfscheibe 105 hat die Form einer Mantelfläche eines geraden Kreiszylinders. Dieser Teil der Oberfläche dient der Aufnahme eines Torsionstilgers 107. Der Torsionstilger 107 besteht aus einer Elastomerschicht 109, einem ersten Segmenten 111a, einem zweiten Segment 111b, Fixierschrauben 113, Spannschrauben 115 und Zwischenstücken 117. Die Segmente 111a, 111b sind in sich geschlossen und umgeben die Schrumpfscheibe in Umfangsrichtung vollständig. Jedes Segment 111a, 111b besteht aus mehreren Teilsegmenten.

Zwischen dem ersten Segment 111a und der Dämpfungsschicht 109 sowie zwischen dem zweiten Segment 111b und der Dämpfungsschicht 109 befinden sich Zwischenstücke 117. Die Zwischenstücke 117 und die Dämpfungsschicht 119 sind an die Abmessungen der Schrumpfscheibe 105 angepasst. Eine Anpassung der Segmente 111a, 111b ist nicht erforderlich. Die gleichen Segmente 111a, 111b lassen sich daher für Schrumpfscheiben 105 unterschiedlicher Dimension verwenden.

Jeweils ein Teilsegment des ersten Segments 111a und ein Teilsegment des zweiten Segments 111b werden mittels zweier Spannschrauben 115 gegeneinander verspannt. Die Kraft der Verspannung ruft eine Normalkraft hervor, die in radialer Richtung auf die Zwischenstücke 117 wirkt. Dadurch kommt es zu einem Kraftschluss zwischen den Zwischenstücken 117 und der Dämpfungsschicht 109.

Die Fixierschrauben 113 verlaufen axial durch die einzelnen Teilsegmente hindurch und fixieren diese aneinander. Zwischen den Zwischenstücken 117 und den Segmenten 111a, 111b kommt durch Stifte 119 eine formschlüssige Verbindung zustande. Die Stifte 119 werden von den Zwischenstücken 117 ausgebildet und greifen in entsprechende Bohrungen der Segmente 111a, 111b ein.

### Bezugszeichen

- 101: Getriebe
- 103: Rotorwelle
- 105: Schrumpfscheibe
- 107: Torsionstilger
- 109: Elastomerschicht
- 111a: erstes Segment
- 111b: zweites Segment
- 113: Fixierschraube
- 115: Spannschraube
- 117: Zwischenstück
- 119: Stifte

## Patentansprüche

1. Torsionstilger zur Befestigung auf einem zylindrischen Abschnitt (105) einer Welle (103);
mit einem Schwungring (111a, 111b, 113, 117, 119), mindesten einem Spannmittel und einer elastischen Einlage (109) zwischen dem Schwungring (111a, 111b, 113, 117, 119) und dem zylindrischen Abschnitt (105); wobei
das Spannmittel ein erstes Segment (111a) und ein zweites Segment (111b) des Schwungrings (111a, 111b, 113, 117, 119) gegen den zylindrischen Abschnitt (105) verspannt; **dadurch gekennzeichnet, dass**
der Schwungring (111a, 111b, 113, 117, 119) ein Zwischenstück (117) aufweist; wobei
das Zwischenstück (117) zwischen dem ersten Segment (111a) und der Einlage (109) und/oder zwischen dem zweiten Segment (111b) und der Einlage (109) angeordnet ist.

2. Torsionstilger zur Befestigung auf einem zylindrischen Abschnitt (105) einer Welle (103);
mit einem Schwungring (111a, 111b, 113, 117, 119) und mindesten einem Spannmittel; wobei
das Spannmittel ein erstes Segment (111a) und ein zweites Segment (111b) des Schwungrings (111a, 111b, 113, 117, 119) gegen den zylindrischen Abschnitt (105) verspannt; **dadurch gekennzeichnet, dass**
das erste Segment (111a) und das zweite Segment (111b) jeweils ein erstes Teilsegment und eine zweites Teilsegment umfassen; wobei
ein erstes Spannmittel das erste Teilsegment des ersten Segments (111a) und das erste Teilsegment des zweiten Segments (111b) gegen den zylindrischen Abschnitt (105) verspannt; und wobei
ein zweites Spannmittel das zweite Teilsegment des ersten Segments (111a) und das zweite Teilsegment des zweiten Segments (111b) gegen den zylindrischen Abschnitt verspannt.

3. Torsionstilger nach einem der vorhergehenden Ansprüche; **dadurch gekennzeichnet, dass**
das Spannmittel zwischen dem ersten Segment (111a) und dem zweiten Segment (111b) verspannt ist.

4. Torsionstilger nach einem der vorhergehenden Ansprüche; **dadurch gekennzeichnet, dass**
die Spannmittel eine bezüglich des zylindrischen Abschnitts (105) tangential verlaufende Spannkraft auf das erste Segment (111a) und das zweite Segment (111b) ausübt.

5. Torsionstilger nach einem der vorhergehenden Ansprüche; **dadurch gekennzeichnet, dass**
der Schwungring (111a, 111b, 113, 117, 119) eine hohlzylindrische Grundform hat.

6. Torsionstilger nach einem der vorhergehenden Ansprüche; **dadurch gekennzeichnet, dass**
das erste Segment (111a) und das zweite Segment (111b) baugleich sind.

7. Torsionstilger nach dem vorhergehenden Anspruch; **dadurch gekennzeichnet, dass**
das erste Segment (111a) und das zweite Segment (111b) um einen Winkel von 180° um eine Mittelachse des zylindrischen Abschnitts (105) verdreht zueinander angeordnet sind.

8. Torsionstilger nach einem der vorhergehenden Ansprüche; **gekennzeichnet durch**
eine erste, radial und axial verlaufende Trennfuge zwischen dem ersten Segment (111a) und dem zweiten Segment (111b).

9. Torsionstilger nach dem vorhergehenden Anspruch; **gekennzeichnet durch**
eine zweite, radial und axial verlaufende Trennfuge zwischen dem ersten Segment und dem zweiten Segment.

10. Torsionstilger nach einem der Ansprüche 2 bis 9; **dadurch gekennzeichnet, dass**
das erste Teilsegment und das zweite Teilsegment des ersten Segments (111a) baugleich sind; wobei
das erste Teilsegment und das zweite Teilsegment des zweiten Segments (111b) baugleich sind.

11. Torsionstilger nach dem vorhergehenden Anspruch; **dadurch gekennzeichnet,**
**dass**
das erste Teilsegment und das zweite Teilsegment des ersten Segments (111a) axial versetzt zueinander angeordnet sind; wobei
das erste Teilsegment und das zweite Teilsegment des zweiten Segments (111b) axial versetzt zueinander angeordnet sind.

12. Torsionstilger nach einem der Ansprüche 2 bis 11; **gekennzeichnet durch**
eine radial und in Umfangsrichtung verlaufende Trennfuge zwischen dem ersten Teilsegment und dem zweiten Teilsegment des ersten Segments (111a); und durch eine radial und in Umfangsrichtung verlaufende Trennfuge zwischen dem ersten Teilsegment und dem zweiten Teilsegment des zweiten Segments (111b).

13. Anordnung für einen Antriebstrang einer Windkraftanlage;
mit einem Getriebe (101), einer Rotorwelle (103) und einer Schrumpfscheibe (105);
wobei
die Rotorwelle (103) mittels der Schrumpfscheibe (105) drehfest mit einer Eingangswelle des Getriebes (101) verbunden ist; **gekennzeichnet durch**
einen Torsionstilger nach einem der vorhergehenden Ansprüche; wobei
der Torsionstilger auf der Schrumpfscheibe (105) befestigt ist.

## Claims

1. Torsion absorber for securing on a cylindrical portion (105) of a shaft (103);
having an inertia ring (111a, 111b, 113, 117, 119), at least one tensioning means and an elastic insert (109) between the inertia ring (111a, 111b, 113, 117, 119) and the cylindrical portion (105); wherein
the tensioning means braces a first segment (111a) and a second segment (111b) of the inertia ring (111a, 111b, 113, 117, 119) against the cylindrical portion (105);
**characterized in that**
the inertia ring (111a, 111b, 113, 117, 119) has an intermediate piece (117); wherein
the intermediate piece (117) is arranged between the first segment (111a) and the insert (109) and/or between the second segment (111b) and the insert (109).

2. Torsion absorber for securing on a cylindrical portion (105) of a shaft (103);
having an inertia ring (111a, 111b, 113, 117, 119) and at least one tensioning means; wherein
the tensioning means braces a first segment (111a) and a second segment (111b) of the inertia ring (111a, 111b, 113, 117, 119) against the cylindrical portion (105);
**characterized in that**
the first segment (111a) and the second segment (111b) each comprise a first partial segment and a second partial segment; wherein
a first tensioning means braces the first partial segment of the first segment (111a) and the first partial segment of the second segment (111b) against the cylindrical portion (105); and wherein
a second tensioning means braces the second partial segment of the first segment (111a) and the second partial segment of the second segment (111b) against the cylindrical portion.

3. Torsion absorber according to either of the preceding claims; **characterized in that**
the tensioning means is braced between the first segment (111a) and the second segment (111b).

4. Torsion absorber according to one of the preceding claims; **characterized in that**
the tensioning means exerts a tensioning force running tangentially with respect to the cylindrical portion (105) on the first segment (111a) and the second segment (111b).

5. Torsion absorber according to one of the preceding claims; **characterized in that**
the inertia ring (111a, 111b, 113, 117, 119) has a hollow-cylindrical basic shape.

6. Torsion absorber according to one of the preceding claims; **characterized in that**
the first segment (111a) and the second segment (111b) are structurally identical.

7. Torsion absorber according to the preceding claim; **characterized in that**
the first segment (111a) and the second segment (111b) are arranged rotated with respect to each other by an angle of 180° about a central axis of the cylindrical portion (105).

8. Torsion absorber according to one of the preceding claims; **characterized by**
a first, radially and axially running separating joint between the first segment (111a) and the second segment (111b).

9. Torsion absorber according to the preceding claim; **characterized by**
a second, radially and axially running separating joint between the first segment and the second segment.

10. Torsion absorber according to one of Claims 2 to 9; **characterized in that**
the first partial segment and the second partial segment of the first segment (111a) are structurally identical;
wherein
the first partial segment and the second partial segment of the second segment (111b) are structurally identical.

11. Torsion absorber according to the preceding claim; **characterized in that**
the first partial segment and the second partial segment of the first segment (111a) are arranged axially offset with respect to each other; wherein
the first partial segment and the second partial segment of the second segment (111b) are arranged axially offset with respect to each other.

12. Torsion absorber according to one of Claims 2 to 11; **characterized by**
a separating joint running radially and in the circumferential direction between the first partial segment and the second partial segment of the first segment (111a); and by
a separating joint running radially and in the circumferential direction between the first partial segment and the second partial segment of the second segment (111b).

13. Arrangement for a drive train of a wind turbine;
having a transmission (101), a rotor shaft (103) and a shrink-fitting disc (105);
wherein
the rotor shaft (103) is connected for conjoint rotation to an input shaft of the transmission (101) by means of the shrink-fitting disc (105); **characterized by**
a torsion absorber according to one of the preceding claims; wherein
the torsion absorber is secured on the shrink-fitting disc (105).

## Revendications

1. Absorbeur de vibrations de torsion destiné à la fixation sur une partie cylindrique (105) d'un arbre (103) ;
comportant un volant d'inertie (111a, 111b, 113, 117, 119), au moins un moyen de serrage et un insert élastique (109) entre le volant d'inertie (111a, 111b, 113, 117, 119) et la partie cylindrique (105) ; dans lequel
le moyen de serrage serre un premier segment (111a) et un deuxième segment (111b) du volant d'inertie (111a, 111b, 113, 117, 119) contre la partie cylindrique (105) ;
**caractérisé en ce que**
le volant d'inertie (111a, 111b, 113, 117, 119) présente une pièce intermédiaire (117) ;
la pièce intermédiaire (117) étant disposée entre le premier segment (111a) et l'insert (109) et/ou entre le deuxième segment (111b) et l'insert (109).

2. Absorbeur de vibrations de torsion destiné à la fixation sur une partie cylindrique (105) d'un arbre (103) ;
comportant un volant d'inertie (111a, 111b, 113, 117, 119) et au moins un moyen de serrage ; dans lequel
le moyen de serrage serre un premier segment (111a) et un deuxième segment (111b) du volant d'inertie (111a, 111b, 113, 117, 119) contre la partie cylindrique (105) ;
**caractérisé en ce que**
le premier segment (111a) et le deuxième segment (111b) comprennent respectivement un premier segment partiel et un deuxième segment partiel ;
un premier moyen de serrage serrant le premier segment partiel du premier segment (111a) et le premier segment partiel du deuxième segment (111b) contre la partie cylindrique (105) ; et
un deuxième moyen de serrage serrant le deuxième segment partiel du premier segment (111a) et le deuxième segment partiel du deuxième segment (111b) contre la partie cylindrique.

3. Absorbeur de vibrations de torsion selon l'une des revendications précédentes ; **caractérisé en ce que**
le moyen de serrage est serré entre le premier segment (111a) et le deuxième segment (111b).

4. Absorbeur de vibrations de torsion selon l'une des revendications précédentes ; **caractérisé en ce que**
le moyen de serrage exerce sur le premier segment (111a) et le deuxième segment (111b) une force de serrage s'étendant tangentiellement par rapport à la partie cylindrique (105).

5. Absorbeur de vibrations de torsion selon l'une des revendications précédentes ; **caractérisé en ce que**
le volant d'inertie (111a, 111b, 113, 117, 119) a une forme de base cylindrique creuse.

6. Absorbeur de vibrations de torsion selon l'une des revendications précédentes ; **caractérisé en ce que**
le premier segment (111a) et le deuxième segment (111b) sont de construction identique.

7. Absorbeur de vibrations de torsion selon la revendication précédente ; **caractérisé en ce que**
le premier segment (111a) et le deuxième segment (111b) sont disposés de manière tournée l'un par rapport à l'autre d'un angle de 180° autour d'un axe central de la partie cylindrique (105).

8. Absorbeur de vibrations de torsion selon l'une des revendications précédentes ; **caractérisé par**
un premier joint de séparation, s'étendant radialement et axialement, entre le premier segment (111a) et le deuxième segment (111b).

9. Absorbeur de vibrations de torsion selon la revendication précédente ; **caractérisé par**
un deuxième joint de séparation, s'étendant radialement et axialement, entre le premier segment et le deuxième segment.

10. Absorbeur de vibrations de torsion selon l'une des revendications 2 à 9 ; **caractérisé en ce que**
le premier segment partiel et le deuxième segment partiel du premier segment (111a) sont de construction identique ;
le premier segment partiel et le deuxième segment partiel du deuxième segment (111b) étant de construction identique.

11. Absorbeur de vibrations de torsion selon la revendication précédente ; **caractérisé en ce que**
le premier segment partiel et le deuxième segment partiel du premier segment (111a) sont disposés de manière décalée axialement l'un par rapport à l'autre ;
le premier segment partiel et le deuxième segment partiel du deuxième segment (111b) étant disposés de manière décalée axialement l'un par rapport à l'autre.

12. Absorbeur de vibrations de torsion selon l'une des revendications 2 à 11 ; **caractérisé par**
un joint de séparation, s'étendant radialement et dans la direction périphérique, entre le premier segment partiel et le deuxième segment partiel du premier segment (111a) ; et par
un joint de séparation, s'étendant radialement et dans la direction périphérique, entre le premier segment partiel et le deuxième segment partiel du deuxième segment (111b).

13. Agencement pour une chaîne cinématique d'une éolienne ;
comportant une transmission (101), un arbre de rotor (103) et un disque rétractable (105) ; dans lequel
l'arbre de rotor (103) est relié de manière solidaire en rotation à l'arbre d'entrée de la transmission (101) au moyen du disque rétractable (105) ; **caractérisé par**
un absorbeur de vibrations de torsion selon l'une des revendications précédentes ;
l'absorbeur de vibrations de torsion étant fixé sur le disque rétractable (105).
